# EUROPEAN PATENT SPECIFICATION

(11) **EP 3 999 225 B1**
(45) Date of publication and mention of the grant of the patent: **03.07.2024**
(21) Application number: 20739716.7
(22) Date of filing: 17.07.2020
(51) Int. Cl.: B01J 13/10, A23P 10/30, A61K 9/50, B01J 13/14

(54) **ENCAPSULATION OF LIPOPHILIC ACTIVES WHICH ARE SENSITIVE TO ACID DEGRADATION**
VERKAPSELUNG VON LIPOPHILEN WIRKSTOFFEN, DIE EMPFINDLICH GEGEN SÄUREABBAU SIND
ENCAPSULATION D'AGENTS ACTIFS LIPOPHILES SENSIBLES À LA DÉGRADATION DES ACIDES

(30) Priority: 19.07.2019 EP 19187183
(43) Date of publication of application: 25.05.2022
(73) Proprietor: DSM IP Assets B.V., 6411 TE Heerlen (NL)
(72) Inventor: KRILL, John David, 4303 Kaiseraugst (CH); TANG, Qiong, 4303 Kaiseraugst (CH)
(74) Representative: dsm-firmenich IP
(86) International application number: PCT/EP2020/070237
(87) International publication number: WO 2021/013710

(56) References cited:
- EP-A1- 1 371 410
- WO-A1-2004/054702
- WO-A1-2008/142637
- WO-A1-2013/056075
- WO-A1-2013/174921
- WO-A1-2017/197453
- WO-A1-2019/110555
- WO-A2-2008/085997
- FR-A1- 3 046 088
- US-A1- 2013 004 617

## Description

### Technical field

The present invention relates to the encapsulation of lipophilic actives which are used in food, feed, pharma and/or cosmetics.

### Background of the invention

There are multiple reasons for encapsulation of a lipophilic active. Encapsulation may increase solubility of the active, may control the release of the active or may increase the stability of the active.

Various encapsulation methods are known. Unfortunately, they all have certain disadvantages.

A major issue is the complexity of known methods. Complexity can be due to the large number of starting materials that is needed. For complex coacervation, for example, at least two different polymers must be ordered separately. Thus, two suppliers need to be sourced, the shipment of two products must be organized and a sophisticated warehouse management system is needed.

Thus, there is a need for a method with lower complexity.

Lowering the complexity of encapsulation process is challenging because the material used for encapsulation must meet numerous criteria. At least, the material must be nontoxic. For application in food and feed, it must also be edible. For application in food and pharma, the material should be vegetarian or vegan. The material should originate from a non-genetically modified organism (non-GMO) which can be grown in a sustainable manner (i.e. using less resources).

Thus, there is a need for a method for encapsulation with edible, sustainable, non-GMO, vegetarian or vegan material, wherein the complexity of the method is decreased.

Some lipophilic actives which need to be encapsulated are sensitive to acid degradation. An example of such active is vitamin A. Therefore, the method for encapsulation should not involve a process step, wherein the pH must be lowered to less then 5 or even worse, to less than 4 or 3.

Thus, there is a need for a method for encapsulation with edible, sustainable, non-GMO, vegetarian or vegan material, wherein the method is suitable for encapsulating lipophilic actives which are sensitive to acid degradation and wherein the complexity of the method is decreased.

GB 935,812 discloses a coacervation process in a manner to enable pH-sensitive materials to be encapsulated. This prior art document relates to systems based on gelatine. Gelatine is neither vegetarian nor vegan. WO 2004/054702 A1 discloses a method of encapsulating an oil-phase, said method comprising the steps of providing an emulsion of an oil-phase in an aqueous solution of beta-lactoglobulin and one or more polymers having an isoelectric point below that of beta-lactoglobulin and inducing coacervation by a pH change. The polymer having an isoelectric point below that of beta-lactoglobulin may be serum albumin. The isoelectric point of beta-lactoglobulin is 5.1-5.2. The isoelectric point of serum albumin is 4.7. WO 2019/110555 A1 discloses a rapeseed protein isolate comprising cruciferin and napin.

### Summary of the invention

The problems underlying the present invention are solved by a method of encapsulating at least one lipophilic compound, said method comprising the steps:
a) selection of protein A, wherein said protein's isoelectric point pl(A) is from 6 to 8;
b) selection of protein B, wherein said protein's isoelectric point pl(B) is at least 9;
c) provision of a composition comprising (i) water, (ii) selected protein A and (iii) selected protein B;
d) addition of at least one lipophilic compound to the composition obtained in step c);
e) emulsification of the composition obtained in step d);
f) inducement of coacervation; and
g) optionally inducement of crosslinking; and
wherein protein A is a globulin and wherein protein B is an albumin.

In a preferred embodiment of the invention, one single protein isolate comprising both, protein A and B, is used for providing the composition of step c). Using one single starting material instead of two, three or even more different polymers significantly reduces the complexity of the process.

Thus, the present invention also relates to the use of a specified protein isolate for manufacturing coacervates.

The preferred protein isolate is vegan and vegetarian. Thus, gelatine is preferably not used in the method of the invention. Preferably, the protein isolate is an extract from a non-GMO, edible plant.

In a preferred embodiment of the invention, sustainability is achieved by using a protein isolate which is the by-product of an industrial process. Even more preferably, the protein isolate is an extract from the cold press cake obtained when cold crushing rapeseed such as cold crushing non-GMO rapeseed.

Thus, the present invention also relates to the use of a native rapeseed protein isolate for manufacturing coacervates.

Preferably, coacervation in step f) is not induced by lowering the pH of the composition obtained in step e). Instead, coacervation is induced either by increasing the pH of the emulsion obtained in step e) or by dilution of the emulsion obtained in step e) with water. Thus, lipophilic actives can be encapsulated even if they are sensitive to acid.

The present invention also relates to coacervate capsules which are obtainable by the method of the invention. Such capsules are stable, edible, vegan, vegetarian, non-GMO, free of organic solvents and/or effectively protect the lipophilic active from e.g. oxidation. In addition, such capsules are easy to manufacture and may also encapsulate an active which is sensitive to acid.

### Detailed description of the invention

The present invention relates to the use of at least two proteins (protein A and protein B) for encapsulating lipophilic compounds by coacervation. Proteins are large biomolecules, or macromolecules, comprising or consisting of one or more long chains of amino acid residues.

In one embodiment of the invention, one single protein isolate which comprises both proteins is used to encapsulate at least one lipophilic compound. Preferably, said protein isolate is the native rapeseed protein isolate disclosed in WO 2018/007493. The rapeseed protein isolate disclosed in WO 2018/007493 is different from ordinary rapeseed protein; it consists essentially of cruciferin and napin and has a significantly higher solubility in water than ordinary rapeseed protein. Surprisingly, coacervates can be easily formed with the rapeseed protein isolate disclosed in WO 2018/007493. Thus, one embodiment of the present invention relates to the use of the rapeseed protein isolate disclosed in WO 2018/007493 for manufacturing coacervates. Preferably, said coacervates encapsulate at least one lipophilic compound.

When applying the method of the invention, a slurry is obtained which comprises the coacervates of the invention. To obtain a powder, said slurry may then be spray dried. The obtained powder comprises a lipophilic compound that is at least partially encapsulated.

Thus, the present invention also relates to the use of the native rapeseed protein isolate disclosed in WO 2018/007493 for manufacturing a slurry that comprises coacervates. Preferably, said coacervates encapsulate at least one lipophilic compound. The present invention also relates to the use of the native rapeseed protein isolate disclosed in WO 2018/007493 for manufacturing a powder that comprises coacervates, wherein said coacervates encapsulate at least one lipophilic compound which is preferably sensitive to acid degradation.

### Method of the invention

The method of the present invention is a method of encapsulating at least one lipophilic compound. It comprises several steps which are explained in more detail in the following paragraphs.

### Step a) and step b)

Step a) comprises the selection of protein A. Thereby, pl(A) is preferably from 6.5 to 8, more preferably from 6.5 to 7.5 and most preferably from 7 to 7.5. The isoelectric point "pl" is the pH at which a particular protein carries no net electrical charge or is electrically neutral in the statistical mean. In a preferred embodiment of the present invention, pl is elecrophoretic mobility of proteins measured as follows: Elecrophoretic mobility of proteins is measured using a Malvern Zetasizer Nano ZS (Malvern Instrument Ltd., Malvern, UK). The analysis is conducted with using a disposable capillary cuvette equipped with gold electrodes in which 800 µL of protein solution was added. The proteins are solubilized in MilliQ water and buffers with a pH range from 3 to 8 are added in order. Electrophoretic mobility is measured calculating zeta potential, a technique in which a voltage is applied across a pair of electrodes at either end of a cell containing the protein solution. Zeta potential is measured at every pH step defined with the autotritator. MilliQ water was produced by a Millipore Milli-Q system, producing nanopure water with a water conductivity of 18 mΩ. The expression "pl(A) refers to the isoelectric point of protein A. Protein A is a globulin, is preferably cruciferin, is more preferably cruciferin originating from a vegetable source and is most preferably rapeseed cruciferin.

Step b) comprises the selection of protein B. Thereby, pl(B) is preferably from 9 to 14, more preferably from 9.5 to 13 and most preferably from 10 to 12. The expression "pl(B) refers to the isoelectric point of protein B. Protein B is an albumin, is preferably napin, is more preferably napin originating from a vegetable source, and is most preferably rapeseed napin.

Globulins (such as cruciferin) are poorly soluble or even insoluble in pure water and have higher molecular weights than albumins (such as napin).

In a preferred embodiment of the invention, step a) and step b) are done by choosing a protein isolate that comprises both, protein A and protein B. In this embodiment, protein A and protein B are preferably vegetable proteins, and are more preferably non-genetically modified vegetable proteins. Thereby, protein A is a globulin and protein B is an albumin.

Also preferably, step a) and step b) are done by choosing a protein isolate that comprises cruciferin and napin. Even more preferably step a) and step b) are done by choosing a protein isolate that comprises rapeseed cruciferin and rapeseed napin, wherein said protein isolate is preferably a native rapeseed protein isolate comprising 40 to 65% on dry matter of cruciferins and 35 to 60% on dry matter of napins and/or having a solubility of at least 88% when measured over a pH range from 3 to 10 at a temperature of 23±2°C. Thereby, solubility is measured as explained in WO 2018/007493. The preferred native rapeseed protein isolate comprises from 5% to 65% on dry matter of 12S rapeseed protein where the presence of 12S is verified by Blue Native PAGE. Thereby, MW determination by Blue Native PAGE is explained in more detail in WO 2018/007493.

The most preferred protein isolate of the invention is the native rapeseed protein isolate of claim 1 of WO 2018/007493. Such protein isolate is commercially available under the tradename CanolaPRO^{™} at DSM@ Nutritional Products, Switzerland.

### Step c)

Step c) comprises the provision of a composition comprising (i) water, (ii) selected protein A and (iii) selected protein B.

In a preferred embodiment, a composition comprising (i) water, (ii) cruciferin and (iii) napin is provided in step c). This can be done by mixing the rapeseed protein isolate disclosed in WO 2018/007493 with water. Commercially available CanolaPRO^{™} has a surprisingly high solubility in water which facilitates step c).

In a preferred embodiment, a composition comprising water and a rapeseed protein isolate is provided in step c), wherein said rapeseed protein isolate has a solubility of at least 88% when measured over a pH range from 3 to 10 at a temperature of 23±2°C. Thereby, the rapeseed protein isolate is preferably a native rapeseed protein isolate that comprises 40 to 65% on dry matter of cruciferins and 35 to 60% on dry matter of napins and/or comprises from 5% to 65% on dry matter of 12S rapeseed protein where the presence of 12S is verified by Blue Native PAGE.

Optionally, the composition provided in step c) comprises at least one further polymer, wherein said further polymer is preferably not gelatine. Thus, in an embodiment of the invention, step c) comprises the provision of a composition comprising (i) water, (ii) cruciferin, (iii) napin and at least one further polymer, wherein said at least one further polymer is preferably vegan and/or vegetarian. In a preferred embodiment, the at least one further polymer is a polysaccharide. Even more preferably, the at least one further polymer is a swellable polysaccharide. Swellable polysaccharides are hydrocolloids and include compounds such as Gum Arabic, pectin and carrageenan. Thus, in a preferred embodiment of the invention, step c) comprises the provision of a composition comprising (i) water, (ii) cruciferin, (iii) napin and at least one swellable polysaccharide, wherein said at least one swellable polysaccharide is preferably selected from the group consisting of Gum Arabic, pectin and carrageenan, and wherein the at least one swellable polysaccharide is most preferably Gum Arabic.

### Step d)

Step d) comprises the addition of at least one lipophilic compound to the composition obtained in step c). Preferably, the at least one lipophilic compound is an oil, wherein said oil comprises preferably polyunsaturated fatty acids, and wherein said oil is preferably fish oil comprising polyunsaturated fatty acids or algae oil comprising polyunsaturated fatty acids, and wherein said oil comprises preferably docosahexaenoic acid (DHA) and/or eicosapentaenoic acid (EPA). In the context of the present invention, fish oil comprising polyunsaturated fatty acids and algae oil comprising polyunsaturated fatty acids are referred to as "PUFA oil". Thus, step d) comprises preferably the addition of at least one PUFA oil to the composition obtained in step c). As a source of polyunsaturated fatty acids, vegans and vegetarians prefer algae oil. Fish oil is neither vegan nor vegetarian. Thus, even more preferably, step d) comprises the addition of algae oil to the composition obtained in step c), wherein said algae oil comprises polyunsaturated fatty acids, and wherein said algae oil comprises preferably docosahexaenoic acid (DHA) and/or eicosapentaenoic acid (EPA). Such algae oil is available under the tradename life'sDHA^{™} S40 at DSM@ Nutritional Products, Switzerland. Life'sDHA^{™} S40 is a nutritional oil that contains at least 40 weight-% DHA, based on the total weight of the oil.

Encapsulating lipophilic compounds that are sensitive to acid is particularly challenging because many coacervation methods induce coacervation by the addition of acid. The method of the present invention does not require the addition of acid and is therefore suitable for encapsulating lipophilic compounds that are sensitive to acid.

In one embodiment of the invention, step d) comprises the addition of a lipophilic compound that is sensitive to acid. In a preferred embodiment, the at least one lipophilic compound is selected from the group consisting of vitamins, carotenoids, lipids, edible polymers and active pharmaceutical ingredients. Thus, in one embodiment, step d) comprises the addition of a lipophilic compound that is selected from the group consisting of vitamins, carotenoids, lipids, edible polymers and active pharmaceutical ingredients to the composition obtained in step c).

### Step e)

Step e) comprises the emulsification of the composition obtained in step d). Thereby, emulsification can be done in any suitable manner, e.g. be vigorous stirring. In the context of the present invention, a Malvern Mastersizer 3000 is preferably used for measuring the particle size. Preferably, step e) is done such that oil droplets having an average particle size D (v,0.5) from 0.1 µm to 10 µm, preferably from 0.1 µm to 5, and most preferably from 1.5 µm to 2.5 µm, measured by Laser Diffraction; Malvern Mastersizer 3000, MIE volume distribution, are obtained.

In one embodiment of the method of the invention, the emulsion of claim 1 of WO 2018/007508 is provided in step e).

In a preferred embodiment, the emulsion obtained in step e) comprises or consists of:
i) at least 30 weight-%, preferably at least 40 weight-% and most preferably at least 50 weight-% water, based on the total weight of the composition;
ii) from 1 to 10 weight-%, preferably from 2 to 9 weight-% and most preferably from 3 to 8 weight-% protein A, based on the total weight of the composition;
iii) from 1 to 10 weight-%, preferably from 2 to 9 weight-% and most preferably from 3 to 8 weight-% protein B, based on the total weight of the composition;
iv) from 1 to 60 weight-%, preferably from 1 to 50 weight-% and most preferably from 1 to 40 weight-% of the at least one lipophilic compound, based on the total weight of the composition; and
v) optionally at least one further excipient,
wherein the amounts of compounds i) to v) are selected such that they add up to 100 weight-%.

In an even more preferred embodiment, the emulsion obtained in step e) comprises or consists of:
i) at least 30 weight-%, preferably at least 40 weight-% and most preferably at least 50 weight-% water, based on the total weight of the composition;
ii) from 1 to 10 weight-%, preferably from 2 to 9 weight-% and most preferably from 3 to 8 weight-% cruciferin, based on the total weight of the composition;
iii) from 1 to 10 weight-%, preferably from 2 to 9 weight-% and most preferably from 3 to 8 weight-% napin, based on the total weight of the composition;
iv) from 1 to 60 weight-%, preferably from 1 to 50 weight-% and most preferably from 1 to 40 weight-% of an oil comprising docosahexaenoic acid (DHA) and/or eicosapentaenoic acid (EPA), based on the total weight of the composition; and
v) optionally Gum Arabic,
wherein the amounts of compounds i) to v) are selected such that they add up to 100 weight-%.

In the most preferred embodiment, the emulsion obtained in step e) comprises or consists of:
i) at least 30 weight-%, preferably at least 40 weight-% and most preferably at least 50 weight-% water, based on the total weight of the composition;
ii) from 2 to 20 weight-%, preferably from 4 to 18 weight-% and most preferably from 6 to 16 weight-% of at least one protein isolate, based on the total weight of the composition;
iii) from 1 to 60 weight-%, preferably from 1 to 50 weight-% and most preferably from 1 to 40 weight-% of an oil comprising docosahexaenoic acid (DHA) and/or eicosapentaenoic acid (EPA), based on the total weight of the composition; and
iv) optionally Gum Arabic,

wherein said protein isolate is preferably rapeseed protein isolate and wherein said rapeseed protein isolate is more preferably a native rapeseed protein isolate comprising 40 to 65% on dry matter of cruciferins and 35 to 60% on dry matter of napins and/or having a solubility of at least 88% when measured over a pH range from 3 to 10 at a temperature of23±2°C, and
wherein the amounts of compounds i) to iv) are selected such that they add up to 100 weight-%.

### Step f)

In step f), the emulsion obtained in step e) is treated to induce coacervation. Known methods for inducing coacervation are dilution with water, heating, change of pH, radiation or a combination of thereof.

In a one embodiment, coacervation in step f) is induced by increasing the pH of the composition obtained in step e), preferably to pl(A) < pH < pl(B). The pH of the composition obtained in step e) may be increased by adding a base such as NaOH. Without wishing to be bound by theory, it has been hypothesized that at a pH above pl(A), randomly charged patches appear on the surface of protein(A) which facilitate coacervation. Surprisingly, this mechanism works particularly well if protein A is cruciferin and if protein B is napin. In case protein A is cruciferin and protein B is napin, coacervation in step f) is induced by increasing the pH of the composition obtained in step e) to a pH preferably from 7.8 to 8.2 and more preferably to a pH of 8.

Depending on the composition obtained in step e), a pH adjustment might not be necessary. Surprisingly, if the composition provided in step c) comprises (i) water, (ii) cruciferin, (iii) napin and Gum Arabic, coacervation in step f) can be induced by dilution only. Gum Arabic's pl is very low (around pH 1.8) and thus, no pH adjustment is necessary if the composition provided in step c) comprises in addition to cruciferin and napin also Gum Arabic. This is a particularly easy and a particularly mild method, suitable for encapsulation of lipophilic actives which are sensitive to acid degradation.

In step f), coacervate capsules or agglomerations of coacervate capsules are obtained. Thereby, the average particle size D (v,0.5) can be controlled by adding water to the emulsion obtained in step e) before inducing coacervation. The more water is added, the larger the average particle size will be.

### Optional step g)

After having induced coacervation, the least one lipophilic compound is partially or fully encapsulated by protein A, protein B and the optional at least one further polymer. To increase stability of the obtained coacervates, the method of the present invention comprises optional step g).

In optional step g), the composition obtained in step f) is treated to induce crosslinking. Thereby, crosslinking can be done in any suitable manner, e.g. by irradiation or enzymatically. Crosslinking in step g) is preferably induced by adding a crosslinking agent to the composition obtained in step f), wherein said crosslinking agent is preferably an enzyme, and wherein said enzyme is preferably transglutaminase. In one embodiment, crosslinking in step g) is induced by adding from 0.1 weight-% to 1.5 weight-%, preferably from 0.2 weight-% to 1 weight-%, even more preferably from 0.3 weight-% to 0.7 weight-%, and most preferably 0.5 weight-% transglutaminase to the composition obtained in step f), based on the total weight of the composition obtained in step f).

### Optional step h)

The composition obtained in step f) or step g) is a slurry that comprises water. Typically, the slurry comprises at least 30 weight-%, preferably at least 40 weight-% and most preferably at least 50 weight-% water, based on the total weight of the composition.

In one embodiment, the slurry is ready to be used. Preferably however, the composition obtained in step f) or step g) is spray dried to obtain a powder. Thus, optional step h) comprises the step of spray drying the composition obtained in step f) or the step of spray drying the composition obtained step g).

### Preferred embodiment (without Gum Arabic)

In a preferred embodiment, no Gum Arabic is used in the method of the invention. In this preferred embodiment, the method of encapsulating at least one lipophilic compound comprises the steps:
a) selection of protein A, wherein said protein's isoelectric point pl(A) is from 6 to 8;
b) selection of protein B, wherein said protein's isoelectric point pl(B) is at least 9;
c) provision of a composition comprising (i) water, (ii) selected protein A and (iii) selected protein B;
d) addition of at least one lipophilic compound to the composition obtained in step c);
e) emulsification of the composition obtained in step d); and
f) inducement of coacervation by increasing the pH of the composition obtained in step e) to pl(A) < pH < pl(B);
g) inducement of crosslinking, preferably by adding a crosslinking agent to the composition obtained in step f) or by heating to the composition obtained in step f).

In an even more preferred embodiment, the method of encapsulating at least one lipophilic compound comprises the steps:
a) selection of cruciferin as protein A;
b) selection of napin as protein B;
c) provision of a composition comprising (i) water, (ii) cruciferin and (iii) napin;
d) addition of at least one PUFA oil to the composition obtained in step c), wherein said PUFA oil is preferably an algae oil which comprises polyunsaturated fatty acids;
e) emulsification of the composition obtained in step d); and
f) inducement of coacervation by increasing the pH of the composition obtained in step to a pH from 7.8 to 8.2 and preferably to a pH of 8;
g) inducement of crosslinking, preferably by heating to the composition obtained in step f) to a temperature from 60°C to 80°C or to a temperature from 60°C to 90°C, and preferably to a temperature of 69°C to 71°C.

In the most preferred embodiment, the method of encapsulating at least one lipophilic compound comprises the steps:
i. provision of a composition comprising water and at least one protein isolate;
ii. addition of at least one PUFA oil to the composition obtained in step i), wherein said PUFA oil is preferably an algae oil which comprises polyunsaturated fatty acids;
iii. emulsification of the composition obtained in step ii); and
iv. inducement of coacervation by increasing the pH of the composition obtained in step to a pH from 7.8 to 8.2 and preferably to a pH of 8;
v. inducement of crosslinking, preferably by heating to the composition obtained in step iv) to a temperature from 60°C to 80°C or to a temperature from 60°C to 90°C, and preferably to a temperature of 69°C to 71°C,
wherein said protein isolate is preferably a rapeseed protein isolate and wherein said rapeseed protein isolate is more preferably a native rapeseed protein isolate comprising 40 to 65% on dry matter of cruciferins and 35 to 60% on dry matter of napins and/or having a solubility of at least 88% when measured over a pH range from 3 to 10 at a temperature of23±2°C.

### Preferred embodiment (with Gum Arabic)

In an also preferred embodiment of the invention, Gum Arabic is used in addition to protein A and protein B. In this preferred embodiment, the method of encapsulating at least one lipophilic compound comprises the steps:
a) selection of protein A, wherein said protein's isoelectric point pl(A) is from 6 to 8;
b) selection of protein B, wherein said protein's isoelectric point pl(B) is at least 9;
c) provision of a composition comprising (i) water, (ii) selected protein A and (iii) selected protein B and further comprising Gum Arabic;
d) addition of at least one lipophilic compound to the composition obtained in step c);
e) emulsification of the composition obtained in step d); and
f) inducement of coacervation by dilution of the composition obtained in step, and preferably by adding water to the composition e);
g) inducement of crosslinking, preferably by adding a crosslinking agent to the composition obtained in step f) or by heating to the composition obtained in step f)

In an even more preferred embodiment, the method of encapsulating at least one lipophilic compound comprises the steps:
a) selection of cruciferin as protein A;
b) selection of napin as protein B;
c) provision of a composition comprising (i) water, (ii) cruciferin and (iii) napin and further comprising Gum Arabic;
d) addition of at least one PUFA oil to the composition obtained in step c), wherein said PUFA oil is preferably an algae oil which comprises polyunsaturated fatty acids;
e) emulsification of the composition obtained in step d); and
f) inducement of coacervation by dilution of the composition obtained in step, and preferably by adding water to the composition e);
g) inducement of crosslinking, preferably by adding a crosslinking agent and more preferably by adding an enzyme such as transglutaminase.

In the most preferred embodiment, the method of encapsulating at least one lipophilic compound comprises the steps:
i. provision of a composition comprising water, at least one protein isolate and further comprising Gum Arabic;
ii. addition of at least one PUFA oil to the composition obtained in step i), wherein said PUFA oil is preferably an algae oil which comprises polyunsaturated fatty acids;
iii. emulsification of the composition obtained in step ii); and
iv. inducement of coacervation by dilution of the composition obtained in step, and preferably by adding water to the composition iii);
v. inducement of crosslinking, preferably by adding a crosslinking agent and more preferably by adding an enzyme such as transglutaminase,
wherein said protein isolate is preferably a rapeseed protein isolate and wherein said rapeseed protein isolate is more preferably a native rapeseed protein isolate comprising 40 to 65% on dry matter of cruciferins and 35 to 60% on dry matter of napins and/or having a solubility of at least 88% when measured over a pH range from 3 to 10 at a temperature of 23±2°C.

### Coacervate capsules of the invention

Coacervate capsules of the present invention are obtainable by the herein disclosed method. In the herein described method, protein A and protein B are used. Therefore, the coacervate capsules of the invention comprise herein described protein A and herein described protein B.

The coacervate capsules of the invention comprise protein A and protein B, wherein protein A is a globulin and wherein protein B is an albumin, and wherein protein A is preferably cruciferin and wherein protein B is preferably napin, and wherein protein A is more preferably rapeseed cruciferin and wherein protein B is more preferably rapeseed napin. In an alternative embodiment, the coacervate capsules of the invention comprise protein A, protein B and at least one further polymer, wherein protein A is a globulin and wherein protein B is an albumin, and wherein protein A is more preferably cruciferin and wherein protein B is more preferably napin, and wherein protein A is more preferably rapeseed cruciferin and wherein protein B is more preferably rapeseed napin. In this alternative embodiment, the at least one further polymer is preferably a swellable polysaccharide, and is more preferably a hydrocolloid such as Gum Arabic, pectin, alginate, carboxymethylcellulose (CMC), gellan and carrageenan and is most preferably Gum Arabic.

In one embodiment, the coacervate capsules of the invention comprise protein A and protein B, wherein the weight ratio between protein A and protein B is between 3:1 and 1:3, preferably between 2:1 and 1:2 and most preferably between 1.5:1 and 1:1.5. Preferably, the coacervate capsules of the invention comprise rapeseed cruciferin and rapeseed napin, wherein the weight ratio between rapeseed cruciferin and rapeseed napin is between 3:1 and 1:3, preferably between 2:1 and 1:2 and most preferably between 1.5:1 and 1:1.5. In an alternative embodiment, the coacervate capsules of the invention comprise rapeseed cruciferin, rapeseed napin and at least one further polymer, wherein the weight ratio between rapeseed cruciferin and rapeseed napin is between 3:1 and 1:3, preferably between 2:1 and 1:2 and most preferably between 1.5:1 and 1:1.5. In this alternative embodiment, the at least one further polymer is preferably a swellable polysaccharide, is more preferably a hydrocolloid such as Gum Arabic, pectin and carrageenan and is most preferably Gum Arabic.

Encapsulation of the at least one lipophilic compound is more effective if the weight ratio between the at least one lipophilic compound and protein A is within certain ranges. In a preferred embodiment, the weight ratio between the at least one lipophilic compound and protein A is between 20:1 and 1:1, preferably between 15:1 and 2:1 and most preferably between 10:1 and 3:1.

Encapsulation of the at least one lipophilic compound is also more effective if the weight ratio between the at least one lipophilic compound and protein B is within certain ranges. In a preferred embodiment, the weight ratio between the at least one lipophilic compound and protein B is between 20:1 and 1:1, preferably between 15:1 and 2:1 and most preferably between 10:1 and 3:1.

Preferably, the coacervate capsules of the present invention comprise at least one protein isolate, wherein said at least one protein isolate is preferably a rapeseed protein isolate which comprises preferably cruciferin and napin. More preferably, a protein isolate that comprises rapeseed cruciferin and rapeseed napin, the coacervate capsules of the present invention comprise native rapeseed protein isolate comprising 40 to 65% on dry matter of cruciferins and 35 to 60% on dry matter of napins and/or having a solubility of at least 88% when measured over a pH range from 3 to 10 at a temperature of 23±2°C and/or wherein said native rapeseed protein isolate comprises from 5% to 65% on dry matter of 12S rapeseed protein where the presence of 12S is verified by Blue Native PAGE. Such protein isolate is disclosed in WO 2018/007493 and is commercially available under the tradename CanolaPRO^{™} (DSMO Nutritional Products, Switzerland).

Preferably, the coacervate capsules of the present invention comprise algae oil, wherein said algae oil comprises polyunsaturated fatty acids, and wherein said algae oil comprises preferably docosahexaenoic acid (DHA) and/or eicosapentaenoic acid (EPA). Such algae oil is acceptable for vegans and/or vegetarians.

In the most preferred embodiment, the coacervate capsules of the present invention are free of gelatine and comprise the herein described protein isolate, the herein described algae oil, and optionally Gum Arabic. Such capsules are as source of polyunsaturated fatty acids that is acceptable for vegans and/or vegetarians.

### Use according to the invention

The present invention also relates to the use of a protein isolate for manufacturing coacervates, wherein said protein isolate comprises protein A and protein B, and wherein the isoelectric point pl(A) of said protein A is from 6 to 8, and wherein the isoelectric point pl(B) of said protein B is at least 9, wherein protein A is a globulin and wherein protein B is an albumin. Thereby, protein A and protein B are preferably vegetable proteins.

A preferred embodiment of the present invention relates to the use of a protein isolate for manufacturing coacervates, wherein protein A is more preferably cruciferin and wherein protein B is more preferably napin and wherein protein A is most preferably rapeseed cruciferin and wherein protein B is most preferably rapeseed napin.

An even more preferred embodiment of the present invention relates to the use of a protein isolate for manufacturing coacervates, wherein said protein isolate is native rapeseed protein isolate comprising 40 to 65% on dry matter of cruciferins and 35 to 60% on dry matter of napins and/or having a solubility of at least 88% when measured over a pH range from 3 to 10 at a temperature of 23±2°C and wherein the native rapeseed protein isolate comprises preferably from 5% to 65% on dry matter of 12S rapeseed protein where the presence of 12S is verified by Blue Native PAGE.

### Figures

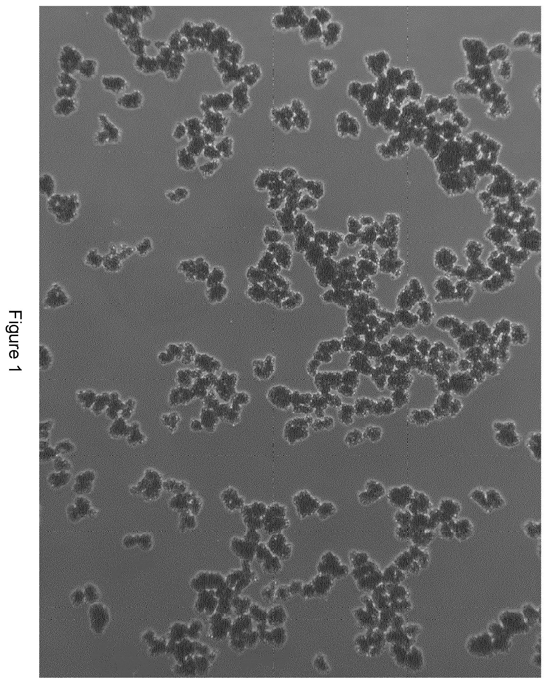

FIGURE 1 shows a picture of the slurry obtained in Example 2. The picture has been taken under light microscope using 100x magnification. In Figure 1, agglomerations of coacervates can be seen. The slurry is ready to be spray dried.

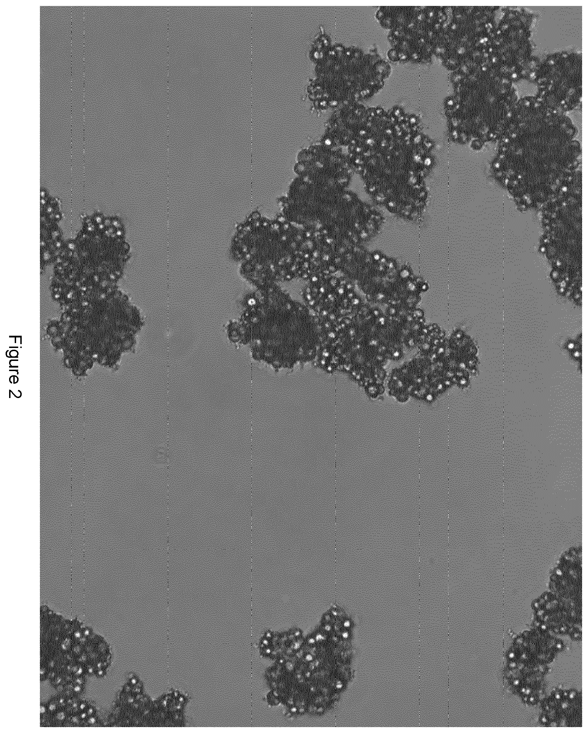

FIGURE 2 also shows a picture of the slurry obtained in Example 2. The picture has been taken under light microscope using 400x magnification.

### Examples

### Example 1

In example 1, a powder comprising PUFA oil was manufactured as follows:
20 g of a native rapeseed protein isolate comprising cruciferin and napin (CanolaPRO^{™}, available at DSM@ Nutritional Products, Switzerland) was dissolved in 150 g water. 80 g PUFA oil (life'sDHA^{™} S40, available at DSM@ Nutritional Products, Switzerland) was then added. The thus obtained mixture was then homogenized to obtain oil droplets having an average particle size D (v,0.5) of around 2 µm. Water was then added (500 g to 1000 g water, depending on the desired average particle size of coacervate capsules). Coacervation was then induced by adjusting the pH to 8 by adding 10% NaOH in drop wise. To induce crosslinking, temperature was increased to 70°C and was maintained at 70°C for 30 minutes. The thus obtained slurry was cooled down to room temperature before spray drying.

The obtained spray dried powder was free-flowing and was free of any unpleasant taste or smell.

### Example 2

In example 2, the process of example 1 was repeated. In example 2, however a further polymer (Gum Arabic) was added in addition to cruciferin and napin. When adding Gum Arabic, coacervation can be induced by dilution only, i.e. without pH adjustment.

In example 2, a powder comprising PUFA oil was manufactured as follows:
27 g of a native rapeseed protein isolate comprising cruciferin and napin (CanolaPRO^{™}, available at DSM@ Nutritional Products, Switzerland) was mixed with 3 g Gum Arabic (available at TIC Gums). The mixture was then dissolved in 150 g water. 70 g PUFA oil (life'sDHA^{™} S40, available at DSM@ Nutritional Products, Switzerland) was then added. The thus obtained mixture was then homogenized to obtain oil droplets having an average particle size D (v,0.5) of around 2 µm. Coacervation was then induced by adding water. Surprisingly, due to the presence of Gum Arabic, a pH adjustment was not necessary. Thus, in contrast to Example 1, no NaOH was added. The mixture was then stirred until most of the foam died down (approx. 1 hour). To induce crosslinking, 0.5 weight-% transglutaminase, based on the total weight of the slurry, was added and the obtained mixture was kept at about 36°C overnight. The thus obtained slurry was then spray dried.

The obtained spray dried powder was free-flowing and free of any unpleasant taste or smell.

## Claims

1. Method of encapsulating at least one lipophilic compound, said method comprising the steps:
a) selection of protein A, wherein said protein's isoelectric point pl(A) is from 6 to 8;
b) selection of protein B, wherein said protein's isoelectric point pl(B) is at least 9;
c) provision of a composition comprising (i) water, (ii) selected protein A and (iii) selected protein B and optionally at least one further polymer being preferably a swellable polysaccharide;
d) addition of at least one lipophilic compound to the composition obtained in step c);
e) emulsification of the composition obtained in step d); and
f) inducement of coacervation; and
wherein protein A is a globulin and wherein protein B is an albumin.

2. Method of claim 1, wherein the coacervation in step f) is induced by increasing the pH of the composition obtained in step e) to pl(A) < pH < pl(B), and/or
wherein coacervation in step f) is induced by dilution of the composition obtained in step e), wherein said dilution is preferably achieved by adding water to the composition obtained in step e).

3. Method according to claim 1 or 2, wherein pl(A) is from 6.5 to 8, preferably from 6.5 to 7.5 and most preferably from 7 to 7.5 and/or
wherein pl(B) is from 9 to 14, preferably from 9.5 to 13 and most preferably from 10 to 12.

4. Method according to any one of the preceding claims, wherein protein A is cruciferin and wherein protein B is napin, and wherein protein A is more preferably rapeseed cruciferin and wherein protein B is more preferably rapeseed napin.

5. Method according to any one of the preceding claims, wherein the composition of step c) is provided by mixing a rapeseed protein isolate with water, wherein said rapeseed protein isolate is preferably a native rapeseed protein isolate comprising 40 to 65% on dry matter of cruciferins and 35 to 60% on dry matter of napins and/or having a solubility of at least 88% when measured over a pH range from 3 to 10 at a temperature of 23±2°C.

6. Method according to any one of the preceding claims, wherein said at least one lipophilic compound is sensitive to acid and/or wherein said at least one lipophilic compound is selected from the group consisting of vitamins, carotenoids, lipids, edible polymers and active pharmaceutical ingredients.

7. Method according to any one of the preceding claims, wherein said at least one lipophilic compound is an oil, and wherein said oil comprises preferably polyunsaturated fatty acids, and wherein said oil is preferably fish oil comprising polyunsaturated fatty acids or algae oil comprising polyunsaturated fatty acids, and wherein said oil comprises preferably docosahexaenoic acid (DHA) and/or eicosapentaenoic acid (EPA).

8. Method according to any one of the preceding claims, wherein the composition obtained in step d) comprises:
i) at least 30 weight-%, preferably at least 40 weight-% and most preferably at least 50 weight-% water, based on the total weight of the composition;
ii) from 1 to 10 weight-%, preferably from 2 to 9 weight-% and most preferably from 3 to 8 weight-% protein A, based on the total weight of the composition;
iii) from 1 to 10 weight-%, preferably from 2 to 9 weight-% and most preferably from 3 to 8 weight-% protein B, based on the total weight of the composition;
iv) from 1 to 60 weight-%, preferably from 1 to 50 weight-% and most preferably from 1 to 40 weight-% of the at least one lipophilic compound, based on the total weight of the composition; and
v) optionally at least one further excipient,
wherein the amounts of compounds i) to v) are selected such that they add up to 100 weight-%.

9. Method according to any one of the preceding claims, wherein said method comprises a further step:
g) inducement of crosslinking,
wherein said crosslinking is preferably induced by heating the composition obtained in step f) or by adding a crosslinking agent to the composition obtained in step f), wherein said crosslinking agent is preferably an enzyme, and wherein said enzyme is preferably transglutaminase.

10. Coacervate capsules obtainable according to any one of the preceding claims, wherein said coacervate capsules comprise protein A and protein B, and wherein protein A is a globulin and wherein protein B is an albumin.

11. Coacervate capsules according to claim 10, wherein the weight ratio between protein A and protein B is between 3:1 and 1:3, preferably between 2:1 and 1:2 and most preferably between 1.5:1 and 1:1.5.

12. Coacervate capsules according to claim 10 or 11, wherein the weight ratio between the at least one lipophilic compound and protein A is between 20:1 and 1:1, preferably between 15:1 and 2:1 and most preferably between 10:1 and 3:1.

13. Use of a protein isolate for manufacturing coacervates, wherein said protein isolate comprises protein A and protein B, and wherein the isoelectric point pl(A) of said protein A is from 6 to 8, and wherein the isoelectric point pl(B) of said protein B is at least 9, wherein protein A is a globulin and wherein protein B is an albumin.

14. Use according to claim 13, wherein protein A is cruciferin and wherein protein B is napin, and wherein protein A is more preferably rapeseed cruciferin and wherein protein B is more preferably rapeseed napin.

15. Use according to claim 13 or 14, wherein said protein isolate is native rapeseed protein isolate comprising 40 to 65% on dry matter of cruciferins and 35 to 60% on dry matter of napins and/or having a solubility of at least 88% when measured over a pH range from 3 to 10 at a temperature of 23±2°C and wherein the native rapeseed protein isolate comprises preferably from 5% to 65% on dry matter of 12S rapeseed protein where the presence of 12S is verified by Blue Native PAGE.

## Patentansprüche

1. Verfahren zur Verkapselung mindestens einer lipophilen Verbindung, wobei das Verfahren die folgenden Schritte umfasst:
a) die Auswahl von Protein A, wobei der isoelektrische Punkt pI(A) des Proteins 6 bis 8 beträgt,
b) die Auswahl von Protein B, wobei der isoelektrische Punkt pI(B) des Proteins mindestens 9 beträgt,
c) die Bereitstellung einer Zusammensetzung, die (i) Wasser, (ii) das ausgewählte Protein A und (iii) das ausgewählte Protein B sowie gegebenenfalls mindestens ein weiteres Polymer, bei dem es sich vorzugsweise um ein quellfähiges Polysaccharid handelt, umfasst,
d) die Zugabe von mindestens einer lipophilen Verbindung zu der in Schritt c) erhaltenen Zusammensetzung,
e) das Emulgieren der in Schritt d) erhaltenen Zusammensetzung und
f) das Induzieren von Koazervation, und
wobei es sich bei Protein A um ein Globulin handelt und wobei es sich bei Protein B um ein Albumin handelt.

2. Verfahren nach Anspruch 1, wobei die Koazervierung in Schritt f) durch Erhöhung des pH-Wertes der in Schritt e) erhaltenen Zusammensetzung auf pI(A) < pH < pI(B) induziert wird und/oder
wobei die Koazervierung in Schritt f) durch Verdünnen der in Schritt e) erhaltenen Zusammensetzung induziert wird, wobei das Verdünnen vorzugsweise durch Zugabe von Wasser zu der in Schritt e) erhaltenen Zusammensetzung erfolgt.

3. Verfahren nach Anspruch 1 oder 2, wobei pI(A) von 6,5 bis 8, vorzugsweise von 6,5 bis 7,5 und am meisten bevorzugt von 7 bis 7,5 beträgt und/oder
wobei pI(B) von 9 bis 14, vorzugsweise von 9,5 bis 13 und am meisten bevorzugt von 10 bis 12 beträgt.

4. Verfahren nach einem der vorhergehenden Ansprüche, wobei es sich bei Protein A um Cruciferin handelt und wobei es sich bei Protein B um Napin handelt und wobei es sich bei Protein A besonders bevorzugt um Raps-Cruciferin handelt und wobei es sich bei Protein B besonders bevorzugt um Raps-Napin handelt.

5. Verfahren nach einem der vorhergehenden Ansprüche, wobei die Zusammensetzung von Schritt c) durch Mischen eines Rapsproteinisolats mit Wasser bereitgestellt wird, wobei es sich bei dem Rapsproteinisolat vorzugsweise um ein natives Rapsproteinisolat handelt, das 40 bis 65 %, bezogen auf die Trockenmasse, Cruciferine und 35 bis 60 %, bezogen auf die Trockenmasse, Napine umfasst und/oder eine Löslichkeit von mindestens 88 %, gemessen über einen pH-Bereich von 3 bis 10 bei einer Temperatur von 2312 °C, aufweist.

6. Verfahren nach einem der vorhergehenden Ansprüche, wobei die mindestens eine lipophile Verbindung säureempfindlich ist und/oder wobei die mindestens eine lipophile Verbindung aus der aus Vitaminen, Carotinoiden, Lipiden, essbaren Polymeren und pharmazeutischen Wirkstoffen bestehenden Gruppe ausgewählt ist.

7. Verfahren nach einem der vorhergehenden Ansprüche, wobei es sich bei der mindestens einen lipophilen Verbindung um ein Öl handelt und wobei das Öl vorzugsweise mehrfach ungesättigte Fettsäuren umfasst und wobei es sich bei dem Öl vorzugsweise um ein mehrfach ungesättigte Fettsäuren umfassendes Fischöl oder ein mehrfach ungesättigte Fettsäuren umfassendes Algenöl handelt und wobei das Öl vorzugsweise Docosahexaensäure (DHA) und/oder Eicosapentaensäure (EPA) umfasst.

8. Verfahren nach einem der vorhergehenden Ansprüche, wobei die in Schritt d) erhaltene Zusammensetzung Folgendes umfasst:
i) mindestens 30 Gew.-%, vorzugsweise mindestens 40 Gew.-% und besonders bevorzugt mindestens 50 Gew.-% Wasser, bezogen auf das Gesamtgewicht der Zusammensetzung,
ii) 1 bis 10 Gew.-%, vorzugsweise 2 bis 9 Gew.-% und am meisten bevorzugt 3 bis 8 Gew.-% Protein A, bezogen auf das Gesamtgewicht der Zusammensetzung,
iii) 1 bis 10 Gew.-%, vorzugsweise 2 bis 9 Gew.-% und am meisten bevorzugt von 3 bis 8 Gew.-% Protein B, bezogen auf das Gesamtgewicht der Zusammensetzung,
iv) 1 bis 60 Gew.-%, vorzugsweise 1 bis 50 Gew.-% und am meisten bevorzugt 1 bis 40 Gew.-% der mindestens einen lipophilen Verbindung, bezogen auf das Gesamtgewicht der Zusammensetzung, und
v) gegebenenfalls mindestens einen weiteren Exzipienten,
wobei die Mengen der Verbindungen i) bis v) so gewählt sind, dass sie sich zu 100 Gew.-% addieren.

9. Verfahren nach einem der vorhergehenden Ansprüche, wobei das Verfahren einen weiteren Schritt umfasst:
g) das Induzieren von Vernetzung,
wobei die Vernetzung vorzugsweise durch Erhitzen der in Schritt f) erhaltenen Zusammensetzung oder durch Zugabe eines Vernetzungsmittels zu der in Schritt f) erhaltenen Zusammensetzung induziert wird, wobei es sich bei dem Vernetzungsmittel vorzugsweise um ein Enzym handelt und wobei das Enzym vorzugsweise Transglutaminase ist.

10. Koazervatkapseln, erhältlich nach einem der vorhergehenden Ansprüche, wobei die Koazervatkapseln Protein A und Protein B umfassen und wobei es sich bei Protein A um ein Globulin handelt und wobei es sich bei Protein B um ein Albumin handelt.

11. Koazervatkapseln nach Anspruch 10, wobei das Gewichtsverhältnis von Protein A zu Protein B zwischen 3:1 und 1:3, vorzugsweise zwischen 2:1 und 1:2 und am meisten bevorzugt zwischen 1,5:1 und 1:1,5 liegt.

12. Koazervatkapseln nach Anspruch 10 oder 11, wobei das Gewichtsverhältnis von der mindestens einen lipophilen Verbindung zu Protein A zwischen 20:1 und 1:1, vorzugsweise zwischen 15:1 und 2:1 und am meisten bevorzugt zwischen 10:1 und 3:1 liegt.

13. Verwendung eines Proteinisolats zur Herstellung von Koazervaten, wobei das Proteinisolat Protein A und Protein B umfasst und wobei der isoelektrische Punkt pI(A) des Proteins A zwischen 6 und 8 liegt und wobei der isoelektrische Punkt pI(B) des Proteins B mindestens 9 beträgt, wobei es sich bei Protein A um ein Globulin handelt und wobei es sich bei Protein B um ein Albumin handelt.

14. Verwendung nach Anspruch 13, wobei es sich bei Protein A um Cruciferin handelt und wobei es sich bei Protein B um Napin handelt und wobei es sich bei Protein A besonders bevorzugt um Raps-Cruciferin handelt und wobei es sich bei Protein B besonders bevorzugt um Raps-Napin handelt.

15. Verwendung nach Anspruch 13 oder 14, wobei es sich bei dem Proteinisolat um natives Rapsproteinisolat handelt, das 40 bis 65 %, bezogen auf die Trockenmasse, Cruciferine und 35 bis 60 %, bezogen auf die Trockenmasse, Napine umfasst und/oder eine Löslichkeit von mindestens 88 %, gemessen über einen pH-Bereich von 3 bis 10 bei einer Temperatur von 2312 °C, aufweist, und wobei das native Rapsproteinisolat vorzugsweise 5 bis 65 %, bezogen auf die Trockenmasse, 12S-Rapsprotein enthält, wobei das Vorhandensein von 12S durch Blue Native PAGE verifiziert wird.

## Revendications

1. Procédé d'encapsulation d'au moins un composé lipophile, ledit procédé comprenant les étapes :
a) sélection d'une protéine A, le point isoélectrique pI(A) de ladite protéine étant de 6 à 8 ;
b) sélection d'une protéine B, le point isoélectrique pI(B) de ladite protéine étant d'au moins 9 ;
c) fourniture d'une composition comprenant (i) de l'eau, (ii) la protéine A choisie et (iii) la protéine B choisie et éventuellement au moins un autre polymère qui est préférablement un polysaccharide gonflable ;
d) ajout d'au moins un composé lipophile à la composition obtenue dans l'étape c) ;
e) émulsification de la composition obtenue dans l'étape d) ; et
f) induction d'une coacervation ; et
la protéine A étant une globuline et la protéine B étant une albumine.

2. Procédé selon la revendication 1, la coacervation dans l'étape f) étant induite en augmentant le pH de la composition obtenue dans l'étape e) jusqu'à pI(A) < pH < pI(B), et/ou
la coacervation dans l'étape f) étant induite par dilution de la composition obtenue dans l'étape e), ladite dilution étant préférablement réalisée par ajout d'eau à la composition obtenue dans l'étape e) .

3. Procédé selon la revendication 1 ou 2, pI(A) étant de 6,5 à 8, préférablement de 6,5 à 7,5 et le plus préférablement de 7 à 7,5 et/ou
pI(B) étant de 9 à 14, préférablement de 9,5 à 13 et le plus préférablement de 10 à 12.

4. Procédé selon l'une quelconque des revendications précédentes, la protéine A étant une cruciférine et la protéine B étant une napine, et la protéine A étant plus préférablement une cruciférine de colza et la protéine B étant plus préférablement une napine de colza.

5. Procédé selon l'une quelconque des revendications précédentes, la composition de l'étape c) étant fournie en mélangeant un isolat de protéine de colza avec de l'eau, ledit isolat de protéine de colza étant préférablement un isolat de protéine de colza native comprenant 40 à 65 % sur la matière sèche de cruciférines et 35 à 60 % sur la matière sèche de napines et/ou ayant une solubilité d'au moins 88 % lorsqu'elle est mesurée sur une plage de pH de 3 à 10 à une température de 23 ± 2 °C.

6. Procédé selon l'une quelconque des revendications précédentes, ledit au moins un composé lipophile étant sensible à un acide et/ou ledit au moins un composé lipophile étant choisi dans le groupe constitué par des vitamines, des caroténoïdes, des lipides, des polymères comestibles et des ingrédients pharmaceutiques actifs.

7. Procédé selon l'une quelconque des revendications précédentes, ledit au moins un composé lipophile étant une huile, et ladite huile comprenant préférablement des acides gras polyinsaturés, et ladite huile étant préférablement une huile de poisson comprenant des acides gras polyinsaturés ou une huile d'algues comprenant des acides gras polyinsaturés, et ladite huile comprenant préférablement de l'acide docosahexaénoïque (DHA) et/ou de l'acide éicosapentaénoïque (EPA).

8. Procédé selon l'une quelconque des revendications précédentes, la composition obtenue dans l'étape d) comprenant :
i) au moins 30 % en poids, préférablement au moins 40 % en poids et le plus préférablement au moins 50 % en poids d'eau, sur la base du poids total de la composition ;
ii) de 1 à 10 % en poids, préférablement de 2 à 9 % en poids et le plus préférablement de 3 à 8 % en poids de protéine A, sur la base du poids total de la composition ;
iii) de 1 à 10 % en poids, préférablement de 2 à 9 % en poids et le plus préférablement de 3 à 8 % en poids de protéine B, sur la base du poids total de la composition ;
iv) de 1 à 60 % en poids, préférablement de 1 à 50 % en poids et le plus préférablement de 1 à 40 % en poids de l'au moins un composé lipophile, sur la base du poids total de la composition ; et
v) éventuellement au moins un excipient supplémentaire,
les quantités des composés i) à v) étant choisies de sorte qu'elles totalisent jusqu'à 100 % en poids.

9. Procédé selon l'une quelconque des revendications précédentes, ledit procédé comprenant une étape supplémentaire :
g) induction d'une réticulation,
ladite réticulation étant préférablement induite par chauffage de la composition obtenue dans l'étape f) ou par ajout d'un agent de réticulation à la composition obtenue dans l'étape f),
ledit agent de réticulation étant préférablement une enzyme, et ladite enzyme étant préférablement une transglutaminase.

10. Capsules de coacervat pouvant être obtenues selon l'une quelconque des revendications précédentes, lesdites capsules de coacervat comprenant la protéine A et la protéine B, et la protéine A étant une globuline et la protéine B étant une albumine.

11. Capsules de coacervat selon la revendication 10, le rapport en poids entre la protéine A et la protéine B étant compris entre 3 : 1 et 1 : 3, préférablement entre 2 : 1 et 1 : 2 et le plus préférablement entre 1,5 : 1 et 1 : 1,5.

12. Capsules de coacervat selon la revendication 10 ou 11, le rapport en poids entre l'au moins un composé lipophile et la protéine A étant compris entre 20 : 1 et 1 : 1, préférablement entre 15 : 1 et 2 : 1 et le plus préférablement entre 10 : 1 et 3 : 1.

13. Utilisation d'un isolat de protéine pour la fabrication de coacervats, ledit isolat de protéine comprenant la protéine A et la protéine B, et le point isoélectrique pI(A) de ladite protéine A étant de 6 à 8, et le point isoélectrique pI(B) de ladite protéine B étant d'au moins 9, la protéine A étant une globuline et la protéine B étant une albumine.

14. Utilisation selon la revendication 13, la protéine A étant une cruciférine et la protéine B étant une napine, et la protéine A étant plus préférablement une cruciférine de colza et la protéine B étant plus préférablement une napine de colza.

15. Utilisation selon la revendication 13 ou 14, ledit isolat de protéine étant un isolat de protéine de colza native comprenant 40 à 65 % sur la matière sèche de cruciférines et 35 à 60 % sur la matière sèche de napines et/ou ayant une solubilité d'au moins 88 % lorsqu'elle est mesurée sur une plage de pH de 3 à 10 à une température de 23 ± 2 °C et l'isolat de protéine de colza native comprenant préférablement de 5 % à 65 % sur la matière sèche de protéine de colza 12S où la présence de 12S est vérifiée par Blue Native PAGE.
